# EUROPEAN PATENT APPLICATION

(11) **EP 3 748 494 A1**
(43) Date of publication of application: **09.12.2020**
(21) Application number: 19178738.1
(22) Date of filing: 06.06.2019
(51) Int. Cl.: G06F 9/445

(54) **A TOOL FOR ANALYSING A SOFTWARE DISTRIBUTION PACKAGE**

(71) Applicant: BlackBerry Limited, Waterloo, Ontario N2K 0A7 (CA)
(72) Inventor: BOULTON, Adam John, Waterloo, Ontario N2K 0A7 (CA)
(74) Representative: Hanna Moore + Curley

(57) **Abstract**

A tool for analysing a software distribution package comprises a component for obtaining application code and a list of specified permissions for the software distribution package; a component for analysing the application code to provide a list of permissions required to resources of a device running the application code; and a component for comparing the list of permissions provided by the analysing component with the list of specified permissions for identifying any permissions required to device resources at run-time not included in the list of specified permissions and for identifying any specified permissions to device resources not required at run-time.

## Description

### Field

The present invention relates to a tool for analysing a software distribution package.

### Background

It is known for software applications configured for operating on devices running, for example, Android or Apple operating systems to be distributed in a package comprising both the application software, typically in a compiled form, and resources including a set of permissions indicating the access required by the application at runtime to the device resources including for example, device hardware, such as a camera, or information stored in the device, such as a user's contact files. For Android applications, for example, permissions required by an application can be specified in a manifest file within the software distribution package.

Software distribution packages can take many forms, but they are generally some form of archive file, for example, a ZIP, AAR (Android ARchive library), XAR (eXtensible ARchive format), JAR (Java Archive), PKG (typically used for Apple applications) or APK (Android Package) file in which component files are losslessly compressed.

Details of how exemplar software distribution packages are built for Android devices can be found at https://developer.android.com/studio/build.

When a distributed application is being installed on a device, the archive file comprising the software distribution package is decompressed and its component files extracted. An extracted file containing permissions is scanned by an installer application and while some permissions can be considered normal and the installing device may immediately grant access to them at installation, other permissions may require explicit permission to be provided before an application may be allowed access to the corresponding device resources. For a device such as a smartphone which is installing an application received from an application store or elsewhere, for example, an enterprise server, the device user will be requested to provide the required explicit permission, whereas in other platforms, for example, in an automotive environment, permission may be granted automatically by the installer without user intervention.

If permissions are specified incorrectly by the provider of the software distribution package, this can result in an application being provided with more permissions than are actually required. While the original application may never invoke this functionality, this can introduce security risks because if the original application is ever exploited through a vulnerability, then an attacker can take advantage of poorly handled requests for permissions to gain access to device resources. On the other hand, under-provisioning the permissions required by an application can lead to run-time errors.

### Summary

According to the present invention, there is provided a tool for analysing a software distribution package. A component of the tool obtains application code and a list of specified permissions for the software distribution package. A component analyses the application code to provide a list of permissions required to resources of a device running the application code. A component compares the list of permissions provided by the analysing component with the list of specified permissions for identifying any permissions required to device resources at run-time not included in the list of specified permissions and for identifying any specified permissions to device resources not required at run-time.

In further aspects, there are provided a method for analysing a software distribution package and a computer program product comprising computer readable code stored on a computer readable medium which when executed on a computing device is arranged to analyse a software distribution package obtaining application code and a list of specified permissions for the software distribution package; analysing the application code to provide a list of permissions required to resources of a device running the application code; and comparing the list of permissions provided by the analysing component with the list of specified permissions for identifying any permissions required to device resources at run-time not included in the list of specified permissions and for identifying any specified permissions to device resources not required at run-time.

### Brief Description of the Drawings

An embodiment of the invention will now be described, by way of example, with reference to the accompanying drawings, in which:
Figure 1 is a schematic diagram of a system including a tool for analysing a software distribution package according to an embodiment of the present invention; and
Figure 2 is a flow diagram illustrating a method performed by the tool of Figure 1.

### Detailed Description

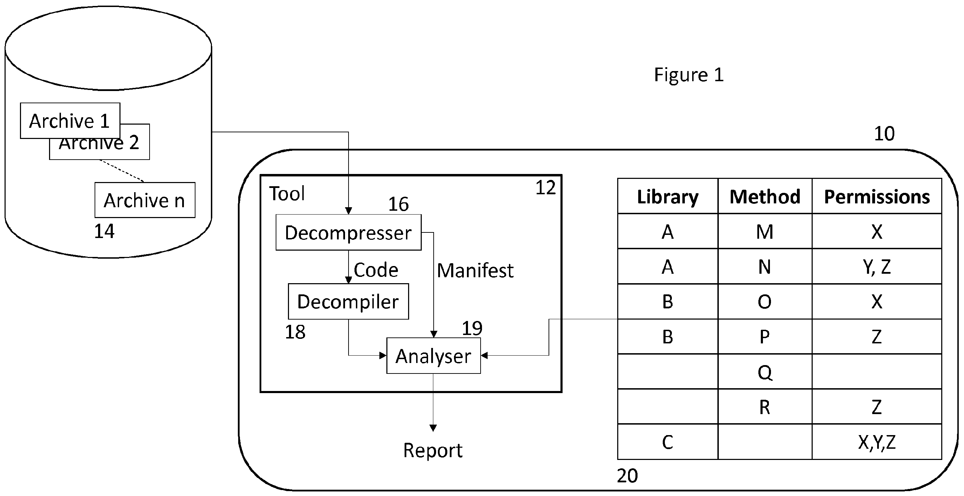

Referring now to Figure 1, there is shown a computer system 10 including a processor (not shown) which is configured to execute software comprising a tool 12 for analysing a software distribution package 14 according to an embodiment of the present invention

The software distribution package 14 can be one of a number of packages 1...n, each for a respective software application, accessible to the tool 12 and may comprise an archive file such as a ZIP, JAR, PKG, APK or any equivalent file. The software distribution package 14 may be stored locally on the computer system 10 on which the tool 12 is installed or may be accessible remotely by the tool 12 through a network connection.

As explained, when a software application, "app", is being developed for distribution and execution on, for example, Android devices, application code and resources for the application are combined into a software distribution package 14.

One such resource is a manifest file which describes essential information about an application module to the tools used to build a software distribution package. Among many other things, the manifest file is required to declare the following:
- The app's package name. Build tools use this to determine the location of code entities. When packaging the app, the build tools replace this value with an application ID, which is used as a unique app identifier on Google Play.
- The components of the app, which include all activities, services, broadcast receivers, and content providers. Each component must define basic properties such as the name of its Kotlin or Java class. It can also declare capabilities such as which device configurations it can handle, and intent filters that describe how the component can be started.
- The hardware and software features the app requires, which affects which devices can install the app from Google Play.
- The permissions that the app needs in order to access protected parts or other apps of the device on which it is to execute. It also declares any permissions that other apps must have if they want to access content from this app.

As will be appreciated, Android apps must request permission to access sensitive user data (such as contacts and SMS records) or certain system features (such as the camera and Internet access). Permission requests can be declared with a <uses-permission> element in the manifest file. Each permission is identified by a unique label. For example, an app that needs to send SMS messages may have the following line in the manifest file:
<uses-permission android:name="android.permission.SEND_SMS"/>

If the permission is granted by a user at runtime, the app is able to use the protected features. If not, its attempts to access those features fail.

An app can define its own customised permissions with a <permission> element within the manifest file, or a permission can be a permission defined by another app, or it can be one of the standard system permissions, such as: "android.permission.CAMERA" or "android.permission.READ_CONTACTS". A complete list of standard system permissions for Android can be found at the following link: https://developer.android.com/reference/android/Manifest.permission.html.

Some permissions can also specify a maxSDKVersion, for example:
<uses-permission android:name="android.permission.WRITE_EXTERNAL_STORAGE" android:maxSdkVersion="18"/>

To declare a permission only on devices that support runtime permissions-that is, devices running Android 6.0 (API level 23) or higher-a "uses-permission-sdk-23" tag is used instead of the "uses-permission" tag.

Tools for analysing software distribution packages of this type of concern in the present application can perform a binary static analysis of a software distribution package, even without the benefit of having access to source code, to provide an analyst with a view of the components of the software package allowing the distributed package to better managed.

Embodiments of the present invention can beneficially be incorporated in such tools to expand their capability and provide for improved security provisioning of applications managed by such tools.

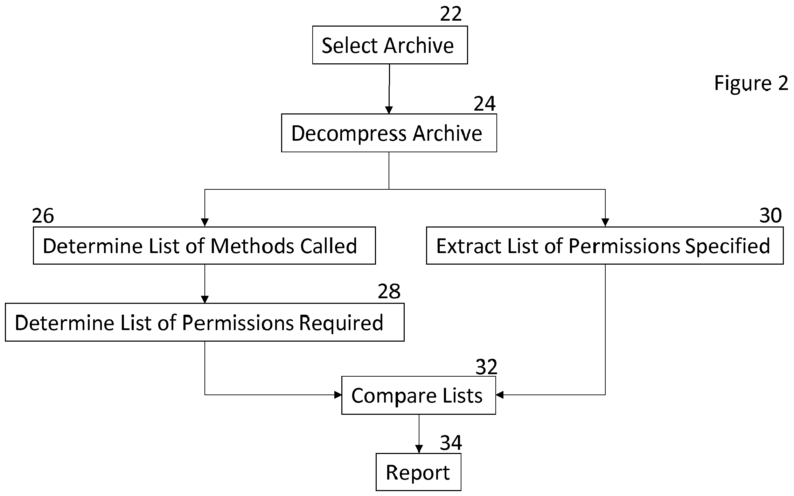

So, referring to Figure 2, a user interface can be provided to allow a user to select a software distribution package 14 which is to be analysed, step 22. The selected package 14 is decompressed using an appropriate decompression tool 16, step 24, to extract its component files which can be otherwise analysed in a conventional manner.

In the present embodiment, in addition or as an alternative to any other analysis which might be performed by the tool, the extracted application code file is then provided to a decompiler 18 where it is at least partially decompiled from its bytecode form to the extent that a list of methods called by the application can be determined, step 26. There are a number of ways of achieving this list of methods called, but the simplest is to analyse the decompiled application code for every instance of a method call and to cumulatively add each method which is called to the list of methods called. Alternatively or in addition, the decompiler 18 can look for instances of libraries which are linked to or incorporated within the extracted application. A library may make a number of methods available to the extracted application and it can be assumed, if a given library has been linked to or incorporated within the extracted application, that a certain set of methods will be called by the extracted application and these can be added to the list of methods called by the application.

In the present embodiment, a database 20 of methods which may be called by any application which is to be analysed by the tool 12 as well as permissions required by those methods is accessible to the tool 12. In Figure 1, the database 20 is shown as being incorporated with the computer system 10, however, it will be appreciated that the database may also be accessible remotely by the tool 12 through a network connection. The database 20 may be generated at least partially automatically from information made available at https://developer.android.com.

So, for example, in the database 20, each of methods M and O require permission X, while method N, requires permissions Y and Z. For completeness and possibly to avoid attack, the database 20 can even include entries for methods such as method Q which are positively indicated as not requiring any permissions.

As mentioned, groups of methods can be provided by libraries which are linked to by an application. So, in the present application, the linking of library A, would imply that methods M and N were going to be called and so permissions X, Y and Z would be needed. On the other hand, methods Q and R may not be imported from a library - these may be user defined methods within a module of the extracted application. These methods may require standard type permissions, such as would be employed by standard library methods, such as method Z; or as mentioned above, such methods may employ application specific permissions. Such customised methods and their permissions would need to be added to the database 20 manually or semi-manually.

Referring back to Figure 2, an analyser component 19 of the tool 12 combines the list of methods called by the application 14 produced by the decompiler 18 at step 26 with the database 20 to produce a list of permissions required by the application, step 28.

This can be done by simply accumulating the required list of permissions from each set of permissions required by each method from the database 20 for the list of called methods provided by the decompiler 18.

It will be seen that in still further variants, the database 20 could directly link a given library to a set of permissions, such as library C to permissions, X,Y,Z without the need to identify individual methods. Thus, immediately the analyser component 19 identified from the decompiled code that a library was linked to an extracted application, an associated list of permissions could be added to the list of permissions required.

Separately, the analyser component 19 parses the manifest file provided by the decompressor 16 to extract a list of permissions specified by the provider of the software distribution package 14, step 30. (It will be appreciated that steps 26-28 and 30 can be performed in any order, so that step 30 can be performed before steps 26-28 or the steps can be performed in parallel.)

The analyser component 19 can then compare the two lists, step 32. In this comparison, any permissions that have been included within the lists produced in both steps 28 and 30 can be regarded as correctly specified within the manifest file.

However, any permissions in the required list of permissions produced in step 28 that do not appear within the manifest file signal that a run-time error would result if the software distribution package 14 were deployed in its current form.

Such packages can be reported to the provider, step 34, to determine if the methods being called which require the non-specified permissions are indeed appropriate and should be retained: if so, the manifest file needs to be expanded to include the required permissions; or if not, the application software needs to be re-written to avoid using such methods.

On the other hand, the analyser component 19 may identify permissions within the manifest file that are not within the required list of permissions produced in step 26.

In this case, such packages can again be reported to the provider, step 34, with a view to redacting the permissions over-provisioned in the manifest file and so to reduce the exposure of a distributed software package to attack.

Note that the above described embodiment has been based on a static analysis of the application software within the software distribution package and it may well be that certain methods included within the application code would or could never in fact be called at run-time and so even if the manifest were under-provisioned in respect of these methods, a run-time error might not occur. Alternative embodiments could involve a more dynamic run-time analysis of the application software as an alternative or in addition to the static analysis to determine the list of permissions required by the application software.

As an alternative or in addition to reporting back to a package provider, the tool 12 can automatically regenerate a manifest file by either: redacting permissions which are not in fact required by the application; and/or adding permissions which are required by the application, before re-building the software distribution package 14 including the updated manifest file.

It will be appreciated that while the above described embodiment has been described as operating in a downstream package analysis tool, the functionality described could also be implemented within a software development kit (SDK) enabling software developers to assess if the permissions they have defined for an application are appropriate before attempting to distribute a software distribution package.

While the above embodiment has been described for exemplary purposes in the context of a software distribution package for the Android operating system, it will be appreciated that the principles of the embodiment can be ported to other operating systems with appropriate changes.

The scope of the claims should not be limited by the preferred embodiments set forth in the examples but should be given the broadest interpretation consistent with the description as a whole.

## Claims

1. A tool (12) for analysing a software distribution package (14) comprising:
a component (16) for obtaining application code and a list of specified permissions for said software distribution package;
a component (19) for analysing said application code to provide a list of permissions required to resources of a device running said application code; and
a component (19) for comparing said list of permissions provided by said analysing component with said list of specified permissions for identifying any permissions required to device resources at run-time not included in said list of specified permissions and for identifying any specified permissions to device resources not required at run-time.

2. The tool according to claim 1 wherein said tool comprises a component (16) for extracting said application code and said list of specified permissions from a built software distribution package.

3. The tool according to claim 2 wherein said tool comprises a component (18) for decompiling said application code extracted from said built software distribution package.

4. The tool according to claim 1 wherein said analysing component is configured to identify within said application code a plurality of methods called, to determine any permissions required to device resources associated with each identified method and to assemble said list of permissions required from said determined permissions.

5. The tool according to claim 4 wherein said tool is operable connected to a database (20) linking each method which might be identified with respective permissions required by said method.

6. The tool according to claim 1 wherein said analysing component is configured to identify within said application code any libraries linked to said application, to determine any permissions required to device resources associated with each identified library and to assemble said list of permissions required from said determined permissions.

7. The tool according to claim 6 wherein said tool is operable connected to a database (20) linking each library which might be identified with respective permissions required by said library.

8. The tool according to claim 2 wherein said tool is configured to add any permissions required to device resources at run-time not included in said list of specified permissions to said specified permissions and to remove any specified permissions to device resources not required at run-time from said list of specified permissions before re-building said software distribution package.

9. The tool according to claim 2 wherein said tool is configured to provide a report (34) indicating any said permissions required to device resources at run-time not included in said list of specified permissions and any said specified permissions to device resources not required at run-time.

10. The tool according to claim 1 wherein said software distribution package comprises an archive file comprising one of a: ZIP, AAR (Android ARchive library), XAR (eXtensible ARchive format), JAR (Java Archive), PKG or APK (Android Package) file

11. The tool according to claim 1 wherein said software distribution package is configured for distribution to an Android device and wherein said list of specified permissions are included in a manifest file.

12. The tool according to claim 11 wherein said permissions include any combination of standard permissions or application specific permissions.

13. The tool according to claim 1 wherein said analysing component is configured to perform a binary static analysis of said application code.

14. A method for analysing a software distribution package comprising:
obtaining (24) application code and a list of specified permissions for said software distribution package;
analysing (28) said application code to provide a list of permissions required to resources of a device running said application code; and
comparing (32) said list of permissions provided by said analysing component with said list of specified permissions for identifying any permissions required to device resources at run-time not included in said list of specified permissions and for identifying any specified permissions to device resources not required at run-time.

15. A computer program product comprising computer readable code stored on a computer readable medium which when executed on a computing device is arranged to analyse a software distribution package according to the method of claim 14.
